(19) Europäisches Patentamt
European Patent Office
Office européen des brevets

(11) **EP 2 226 652 B1**

(12) **EUROPÄISCHE PATENTSCHRIFT**

(45) Veröffentlichungstag und Bekanntmachung des Hinweises auf die Patenterteilung:
**20.11.2013  Patentblatt 2013/47**

(51) Int Cl.:
***G01V 8/10*** *(2006.01)*

(21) Anmeldenummer: **09100158.6**

(22) Anmeldetag: **02.03.2009**

(54) **Optoelektronischer Sensor mit Ausrichtlichtsender**

Optoelectronic sensor with alignment light transmitter

Capteur optoélectronique doté d'un émetteur à lampe d'orientation

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**08.09.2010  Patentblatt 2010/36**

(73) Patentinhaber: **SICK AG**
**79183 Waldkirch (DE)**

(72) Erfinder:
• **Klein, Michael**
**79183 Waldkirch (DE)**
• **Märkle, Christoph**
**79104 Freiburg (DE)**

• **Schindler, Bernhard**
**79263 Simonswald (DE)**
• **Weisenberger, Fabian**
**79312 Emmendingen (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A- 1 503 226          DE-A1-102006 062 125**
**DE-U1-202006 016 588    US-A- 5 496 996**
**US-A1- 2001 030 743**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen optoelektronischen Sensor und ein Verfahren zum Ausrichten des Sensors und zur Detektion von Objekten nach den Oberbegriffen von Anspruch 1 beziehungsweise 11.

In zahlreichen Anwendungen werden Objekte in lichtbasierten Sensoren erkannt. Dabei kann das Objekt einen vorgesehenen Lichtweg unterbrechen, wie dies bei Lichtschranken oder Lichtgittern der Fall ist, oder umgekehrt wie in Lichttastern von dem zu detektierenden Objekt reflektiertes Licht erkannt werden.

Aus der EP 1 503 226 A2 etwa ist ein als Lichttaster ausgebildeter, optischer Sensor mit einem Sender zum Aussenden von Sendelicht, einem Empfänger zum Empfang von an einem Objekt reflektierten Sendelichts und einer Auswerteeinheit bekannt, in der das elektronische Signal des Empfängers ausgewertet und bei Detektion von reflektiertem Sendelicht an einem Objekt ein Objektfeststellungssignal ausgegeben wird. Um auch strukturierte Objekte detektieren zu können, bei denen aufgrund der Strukturen nur ein Teil der Sendelichtstrahlen zum Empfänger zurückreflektiert wird, ist nach dieser Lehre vorgesehen, dass die Sendelichtstrahlen mit einer lichtstreuenden Folie beispielsweise linienförmig aufgeweitet werden, so dass das zu detektierende Objekt großflächiger beleuchtet wird und bei vorhandenem Objekt eine ausreichende Reflexion zur Detektion zur Verfügung steht. Wird also ein Mindestmaß an reflektiertem Licht empfangen, kann der Empfänger dies ermitteln und es wird ein Objektfeststellungssignal ausgegeben.

Ist ein vorgegebener Lichtweg zwischen Sender und Empfänger vorgesehen, so bedarf der Sensor bei der Inbetriebnahme einer Justierung, damit das Sendelicht den Empfänger in ausreichendem Maße trifft. Bei einer Einweglichtschranke muss hierfür die Empfangseinheit gegenüber der Sendeeinheit ausgerichtet werden, während bei auf Reflexion basierenden Sensoren das kooperative reflektierende Ziel gegenüber dem kombinierten Sender/Empfänger auszurichten ist. Ähnliches gilt für Lichtgitter, die sich als Vielzahl nebeneinander angeordneter Lichtschranken entsprechenden Typs auffassen lassen.

Für eine hinreichend genaue Justierung einerseits und eine vereinfachte Handhabung andererseits wurde bereits eine Vielzahl an Lösungen vorgeschlagen.

Die DE 102 12 432 A1 betrifft eine Reflexionslichtschranke mit mehreren Sendern, deren Sendelicht sich zu einer Annäherung an eine Linie überlagern soll. Damit wird das Justierproblem weitgehend umgangen, denn der Empfänger wird in Linienrichtung selbst bei nur ganz grober Ausrichtung einen Abschnitt der Linie empfangen. Dabei geht aber zwangsläufig auch Sendeenergie verloren.

In der EP 0 875 873 B1 wird die Lage des auf einem Matrixempfänger auftreffenden Lichtspots eingelernt. Damit ist man weitgehend unabhängig von der Ausrichtung des Sensors, solange nur irgend ein Lichtempfangselement der Matrix getroffen wird. Dies dient zugleich der Erkennung von Umspiegelungen, denn ein mehrfach reflektierter Strahl trifft zwar möglicherweise noch die Matrix, aber an anderer Stelle. Diese Vorteile werden aber mit dem gegenüber einer einfachen Photodiode deutlich aufwändigeren Matrixempfänger erkauft.

Aus der DE 10 2006 050 189 B4 ist ein Lichtgitter bekannt, welches einen zusätzlichen Ausrichtlichtstrahl größeren Öffnungswinkels aufweist. Dieser bleibt bei der eigentlichen Detektionsaufgabe im Betrieb unberücksichtigt und erleichtert die Grobausrichtung des Lichtgitters. Die Information über die Justierung erschöpft sich aber darin, dass der Ausrichtlichtstrahl überhaupt erkannt wird und ermöglicht keine quantitative Aussage über die Güte der Ausrichtung.

Die DE 199 07 548 C2 schlägt vor, den Empfänger ortsauflösend als eine Art Zielscheibe auszubilden. Durch Vergleich der Empfangsintensität in den äußeren Empfangselementen mit dem mittleren Empfangselement erfolgt dann eine Richtungsanzeige, um die Ausrichtung weiter zu verbessern. Wie bei einer Empfangsmatrix erfordert die einen relativ aufwändigen Empfänger.

Aus der US 2001/0030743 A1 ist ein Laser-Ausrichtsystem mit mehreren Lasern und einem einzigen Ziel bekannt. In einer Ausführungsform ist ein mittlerer von drei Laser direkt auf ein Empfangselement ausgerichtet, und die Strahlen der beiden äußeren Laser werden über je zwei Spiegel auf dasselbe Empfangselement gelenkt. Indem die Laser nacheinander aktiviert und jeweils die Intensität des im Empfangselement registrierten Lichts gemessen wird, werden Versatz und Ausrichtung bestimmt.

Nicht im Zusammenhang mit Justierung ist aus der EP 0 891 004 B1 ein Verfahren zum Betrieb eines optoelektronischen Sensors bekannt, bei dem zur Erkennung von transparenten Gegenständen, wie Glasflaschen oder dergleichen, das Empfangssignal des Empfängers, mit einem Erkennungs-Schwellwert verglichen wird und in Abhängigkeit davon ein Gegenstandsfeststellungssignal ausgegeben wird. Dieser Erkennungs-Schwellwert kann in Abhängigkeit des Empfangssignals geändert werden, so dass beispielsweise einer graduellen Verschmutzung der Optik zu einem gewissen Grade entgegengewirkt werden kann und eine Objekterkennung möglich bleibt.

Es ist daher Aufgabe der Erfindung, die Detektionsfähigkeit eines gattungsgemäßen Sensors zu verbessern.

Diese Aufgabe wird durch einen Sensor gemäß Anspruch 1 und einem Verfahren gemäß Anspruch 11 gelöst.

Dabei geht die Erfindung von dem Grundgedanken aus, mit weiteren Sendern zusätzliche Informationen über die Güte der Ausrichtung zu gewinnen, ohne dabei einen besonders angepassten oder aufwändigeren Lichtempfänger zu benötigen.

Die erfindungsgemäße Lösung bietet also eine elektronische Justagehilfe für die zentrische Ausrichtung des Lichtempfängers gegenüber dem Nutzlichtsender oder einem reflektierenden Ziel. Dies hat den Vorteil, dass seitlicher Versatz vermieden oder unterdrückt wird und somit die Funktionsreserve, das Verhältnis der tatsächlichen Empfangsintensität bei freiem Strahlengang zur Schwelle einer gerade noch detektierbaren Empfangsintensität optimiert wird, somit möglichst groß gegenüber dem Wert Eins ist. Dies ist besonders relevant, wenn hohe Funktionsreserven benötigt werden, etwa für große Reichweiten, variable Bedingungen beispielsweise mit rascher Verschmutzung, oder wenn, wie unten noch ausgeführt, der Sensor zwischen einer vollständigen und einer teilweisen Verdeckung durch das zu detektierende Objekt unterscheiden soll.

Die Ausrichtinformation ist bevorzugt quantitativ, stellt also nicht lediglich binär, fest, dass Licht empfangen wird, sondern enthält ein Gütemaß und in einigen Ausführungsformen auch eine Information darüber, in welche Richtung zur Verbesserung des Gütemaßes nachzujustieren ist.

Der Lichtempfänger weist bevorzugt ein einziges gemeinsames Lichtempfangselement auf, insbesondere eine einfache Photodiode, und es ist jeweils ein Empfangssignal durch selektive Aktivierung des Nutzlichtsenders oder eines der Ausrichtlichtsender per Multiplexing erzeugbar. Ein einziger einfacher Lichtempfänger führt zu einem besonders kostengünstigen Sensor. Da durch die Justierung eine zumindest weitgehende Nutzung des Sendelichts sichergestellt ist, können auch ohne Ortauflösung am Empfänger bereits kleinere Änderungen des Empfangslichts erkannt werden. Durch die einzelne Aktivierung von Sendern kann das einfache Lichtempfangselement per Multiplexing mehrfach genutzt werden, um mehrere unterschiedliche Empfangssignale aufzunehmen.

Dem Nutzlichtsender ist eine Sendeoptik und/oder dem Lichtempfänger eine Empfangsoptik zugeordnet, um das gewünschte Sendelichtprofil beziehungsweise einen gewünschten Sichtbereich für den Empfänger zu erhalten. Je nach Aufbau des Sensors wird die Sendeoptik möglicherweise zugleich als Empfangsoptik genutzt, etwa in einer Reflexionslichtschranke. Auch die Ausrichtlichtsender verwenden dieselbe Sendeoptik wie der Nutzlichtsender, ansonsten könnten unterschiedliche Justierungen der Optiken zu Justagefehlern führen. Sind Ausrichtlichtsender und Nutzlichtsender zueinander in ihren Abständen und optischen Achsen fixiert, etwa durch Anordnung auf derselben Platine, so ist die interne Justierung von vorne herein gewährleistet. Die Optiken weisen bevorzugt eine Stufenlinse auf. So kann der erfindungsgemäße Sensor mit kleinem Bauraum aufgebaut sein, denn bei Verwendung einer Stufenlinse kann der Abstand zwischen Sender bzw. Empfänger und zugeordneter Linse reduziert werden.

Die erfindergemäße Lösung wird bevorzugt eingesetzt, um zwischen Sender und Empfänger bzw. Reflektor einen wohldefinierten Detektionsbereich abzusichern. Der Nutzlichtsender ist hierzu bevorzugt derart ausgebildet, dass austretendes Sendelicht ein in etwa linienförmiges Strahlprofil aufweist. In diesem Zusammenhang umfasst der Begriff Nutzlichtsender auch die gegebenenfalls zugeordnete Optik, das Strahlprofil entsteht also durch den Nutzlichtsender selbst, die zugeordnete Optik oder in deren Zusammenspiel. Ein solcher Sensor kann besonders vorteilhaft beispielsweise zur Detektion von Paletten unterschiedlicher Höhe eingesetzt werden, wenn nämlich das linienförmige Sendelichtprofil senkrecht zur Palette, also in der Regel vertikal, ausgerichtet ist und das Sendelicht von dem Palettenboden unterbrochen wird. Für eine solche Detektion von Paletten wurden bisher entweder schräg ausgerichtete klassische Lichtschranken, die jedoch prinzipbedingt bei beschädigten Paletten etwa mit fehlenden Deckbrettern zu Fehlschaltungen führen können, oder eben ausgerichtete Lichtgitter eingesetzt, die prinzipiell ebenfalls über einen linienförmig ausgedehnten Bereich mit einer gewissen Auflösung Gegenstände detektieren können, welche die einzelnen Strahlen des Lichtgitters unterbrechen. Der erfindungsgemäße Sensor hat demgegenüber aber zahlreiche Vorteile, indem er zwar die erhöhte Sicherheit eines Lichtgitters bietet, demgegenüber aber einfacher aufgebaut ist und eine erhöhte Schaltfrequenz hat, da nicht eine Vielzahl von Lichtstrahlen erzeugt und ausgewertet werden müssen. Des Weiteren weist der erfindungsgemäße Sensor eine kontinuierliche Detektionsebene auf, nicht lediglich eine durch die Einzelstrahlen gegebene diskrete Teilüberwachung. Justiert werden muss nur ein Strahl, nicht sämtliche Einzelstrahlen eines Lichtgitters. Der erfindungsgemäße Sensor bietet somit in manchen Anwendungen einen kostengünstigen und vereinfacht einsetzbaren Ersatz für ein Lichtgitter. Besonders bevorzugt ist, wenn das austretende Sendelicht einen annähernd parallelen Sendelichtstrahlenverlauf hat. Dann ist die Justierung entfernungsunabhängig und auch das Signal auf dem Empfänger unabhängig von der Position des zu detektieren Objektes im Strahlengang.

Nutzlichtsender und/oder Lichtempfänger ist bevorzugt eine Frontscheibe zugeordnet, wobei mindestens eines der Elemente Sendeoptik, Empfangsoptik oder Frontscheibe abschnittsweise Sendelicht absorbierende Muster zur Sendelichthomogenisierung aufweist. Die Muster sind nochmals bevorzugt gedruckt und somit besonders kostengünstig und einfach, auch nachträglich angebracht. Zumeist fällt die Sendelichtintensität zum Rand hin ab. Mittels der Muster wird dieser Randabfall oder eine andere Inhomogenität kompensiert. Das ist besonders vorteilhaft bei linienförmigem Strahlprofil und einem Sensor, der eine Teilabdeckung erkennen kann. Bei homogenem Strahlprofil hängt der Intensitätsverlust bei Teilabdeckung nicht von der Objektlage innerhalb des Strahlprofils ab. Die Frontscheibe ist gewöhnlich Teil eines Gehäuses, welches die Sender und den Lichtempfänger sowie die Auswertungseinheit schützt. Um ein optisches Übersprechen innerhalb des Sensorgehäuses vom Sender zum Empfänger zu verhindern, ist in Weiterbildung der Erfindung zwischen Sender und gegebenenfalls Sendeoptik sowie Empfänger und gegebenenfalls Empfangsoptik eine optische Trennwand vorgesehen.

Erster Ausrichtlichtsender und zweiter Ausrichtlichtsender sind bevorzugt derart zueinander und zu dem Nutzlichtsender angeordnet, dass bei Spiegelung an einer Symmetrieebene durch den Nutzlichtempfänger der Sendelichtkegel des ersten Ausrichtlichtsenders auf denjenigen des zweiten Ausrichtlichtsenders fällt und umgekehrt. Diese symmetrische Anordnung führt zu einer einfachen, entfernungsunabhängigen Auswertungsmöglichkeit zur Gewinnung der Ausrichtinformation. Eine denkbare einfache Anordnung gemäß diese Ausführungsform ist eine gleichmäßige Linienanordnung von erstem Ausrichtlichtsender, Nutzlichtsender und zweitem Ausrichtlichtsender in dieser Reihenfolge und mit jeweils gleichem Winkel zwischen den optischen Achsen der Ausrichtlichtsender und der Mittelachse des Sendelichtbereichs des Nutzlichtsenders.

Die Auswertungseinheit ist bevorzugt dafür ausgebildet, die Ausrichtinformation durch die Vorschrift $((I_2-I_1)/(I_1+I_2))$ aus dem Verhältnis der Differenz $(I_2-I_1)$ der Intensitäten $(I_1,I_2)$ der Empfangssignale bei aktiviertem erstem Ausrichtlichtsender und aktiviertem zweitem Ausrichtlichtsender zu der Summe $(I_1+I_2)$ dieser Intensitäten $(I_1,I_2)$ zu bestimmen. Bei symmetrischer Anordnung der Sender und optimaler Justierung sollte die Differenz der Intensitäten $I_2-I_1$ verschwinden. Durch Bezugnahme auf die Gesamtintensität $I_1+I_2$ werden Abhängigkeiten von Umgebungsbedingungen kompensiert, beispielsweise die Reichweite, Umgebungshelligkeit, Verschmutzung der Optiken und dergleichen.

In vorteilhafter Weiterbildung der Erfindung sind mindestens zwei weitere Ausrichtlichtsender derart angeordnet, dass mit ihrer Hilfe eine Ausrichtinformation in Querrichtung zu der Verbindungslinie zwischen erstem Ausrichtlichtsender und zweitem Ausrichtlichtsender ableitbar ist. Damit wird also eine Justierung in zwei Dimensionen möglich. Für die beiden zusätzlichen Ausrichtlichtsender gilt bezüglich Ausgestaltung und Anordnung das für ersten und zweiten Ausrichtlichtsender Gesagte. Alle Ausrichtlichtsender bilden gemeinsam bevorzugt eine Kreuzform

Der Sensor ist bevorzugt als Lichtschranke, insbesondere Reflexionslichtschranke ausgebildet, indem Licht des Nutzlichtsenders bei freiem Strahlengang direkt oder über einen Reflektor vom Lichtempfänger empfangen wird, wobei die Auswertungseinheit dafür ausgebildet ist, bei Detektion eines opaken Objekts im Strahlengang ein Detektions- oder Schaltsignal auszugeben. Diese Sensorbauweise profitiert besonders von der erfindungsgemäß verbesserten Ausrichtung.

Die Auswerteeinheit weist bevorzugt Mittel zur Bestimmung und Nachführung eines Erkennungs-Schwellwertes (S) auf und kann ein Objekt anhand einer Unterschreitung des Erkennungs-Schwellwerts bei aktiviertem Nutzlichtsender detektieren, wobei der Erkennungs-Schwellwert einem festlegbaren Prozentsatz des Empfangssignals bei freiem Strahlengang entspricht. Mit einer solchen Ausführungsform ist auch außerhalb von Reinraumbedingungen eine besonders zuverlässige Detektion von Objekten möglich, wenn diese nur einen kleineren Teil des Sendelichts unterbrechen, so dass am Empfänger nur geringfügig weniger Licht empfangen wird als bei freiem Strahlengang. Mit der Nachführung des Erkennungs-Schwellwerts, welche die durch Sicherstellen einer guten Justierung ohnehin schon hohe Empfindlichkeit weiter verbessert, ist eine Lichtschranke geschaffen, die zuverlässig auch kleinste Änderungen des Empfangslichts erkennen kann. Der erfindungsgemäße Sensor kann somit auch Lichtgitter bzw. Lichtvorhänge ersetzen, wie dies oben beispielhaft für einen Palettensensors beschrieben ist.

Das erfindungsgemäße Verfahren kann auf ähnliche Weise durch weitere Merkmale ausgestaltet werden und zeigt dabei ähnliche Vorteile. Beispielhafte weitere Merkmale sind auch in den sich an die unabhängigen Ansprüche anschließenden Unteransprüchen beschrieben.

In einer besonders bevorzugten Weiterbildung des erfindungsgemäßen Verfahrens weist das Sendelicht des Nutzlichtsenders ein in etwa linienförmiges Strahlprofil mit annähernd parallelem Sendelichtstrahlenverlauf auf, wobei die optischen Achsen von erstem Ausrichtlichtsender und zweitem Ausrichtlichtsender durch die Mittelachse des parallelen Sendelichtstrahlverlaufs ineinander gespiegelt werden. Diese symmetrische Anordnung ist einfach auszuwerten und entfernungsunabhängig.

Bevorzugt werden in einer Einlernphase des erfindungsgemäßen Verfahrens folgende Schritte ausgeführt:

- Aufnahme der Empfangssignale bei jeweils einzeln aktiviertem Nutzlichtsender, erstem Ausrichtlichtsender und zweitem Ausrichtlichtsender,
- Bewertung des Empfangssignals des Nutzlichtsenders gegenüber einer erforderlichen Mindestintensität, um eine hinreichende Funktionsreserve zu gewährleisten,
- Bewertung der Empfangssignale der Ausrichtlichtsender nach der Vorschrift $(I_2-I_1)/(I_1+I_2)$ gegenüber einer Schwelle und
- Ausgabe einer Korrekturinformation für die Justierung des Sensors oder Anzeige einer ausreichenden Justierung.

In dieser Einlernphase (teach-in) wird die Korrekturinformation verwendet, um den Sensor nachzujustieren, bis eine ausreichende Justierung erreicht ist. Solange die Position des Nutzlichts noch nicht innerhalb eines gewünschten Toleranzfensters auf dem Lichtempfänger liegt, kann der Sensor nicht zuverlässig betrieben werden und blockiert die Sensorfunktion. Die Einlernphase kann beispielsweise manuell durch Aktivieren eines Schalters ausgelöst werden.

In der Einlernphase wird bevorzugt zusätzlich ein Erkennungs-Schwellwert als einstellbarer Prozentsatz des Empfangssignals bei allein aktiviertem Nutzlichtsender und freiem Strahlengang festgelegt, wobei im Betrieb ein Objekt anhand einer Unterschreitung des Erkennungs-Schwellwerts detektiert wird. Auch der Erkennungs-Schwellwert ist damit gut an die Einsatz- und Umgebungsbedingungen angepasst.

Die oder einige der Schritte der Einlernphase werden bevorzugt wiederholt, um die Funktionsreserve, die Justierung und/oder den Erkennungs-Schwellwert im Betrieb sicherzustellen oder nachzuführen. Diese Wiederholungen können beispielsweise zyklisch, beim Einschalten oder auf Anforderung erfolgen. Eine Wiederherstellung von Justierung und Funktionsreserve erfolgt durch eine Wartungsanforderung gegebenenfalls unter Abschaltung der Sensorfunktion, den Erkennungs-Schwellwert führt der Sensor eigenständig in gewissen Zeitabständen nach, indem das Empfangssignal bei freiem Strahlengang gemessen und immer ein fester Prozentsatz davon als neuer Erkennungs-Schwellwert definiert wird. Auf diese Weise können Langzeiteffekte, wie graduelle Verschmutzung der Optik oder Alterungsprozesse, wirksam eliminiert werden. Insgesamt ist durch die genannten Verfahrensschritte stets eine zuverlässige Detektion von Objekten ermöglicht, auch wenn diese nur einen kleineren Teil des Sendelichts unterbrechen.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1 eine Seitenansicht einer Ausführungsform des erfindungsgemäßen Sensors und dessen Überwachungsbereichs;

Fig. 2 eine Draufsicht des Sensors gemäß Figur 1;

Fig. 3 und 4 beispielhafte linienförmige Strahlprofile einer Ausführungsform des erfindungsgemäßen Sensors;

Fig. 5 eine erläuternde Ansicht zur Anordnung von Lichtsendern in dem Sensor und deren Strahlverläufen zur Ermittlung von Ausrichtinformationen;

Fig. 6 beispielhafte Intensitätswerte als Grundlage der Ermittlung von Ausrichtinformationen;

Fig. 7 ein schematisches Diagramm des zeitlichen Verlaufs des Empfangssignals zur Erläuterung eines nachgeführten ErkennungsSchwellwerts in einer Ausführungsform der Erfindung; und

Fig. 8 eine schematische Darstellung einer Ausführungsform einer Frontscheibe zur Strahlhomogenisierung.

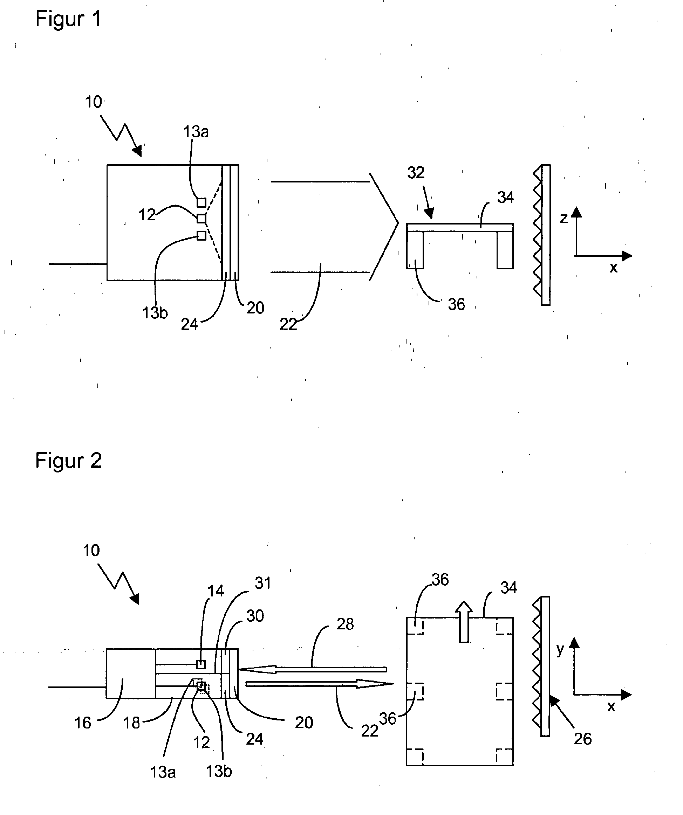

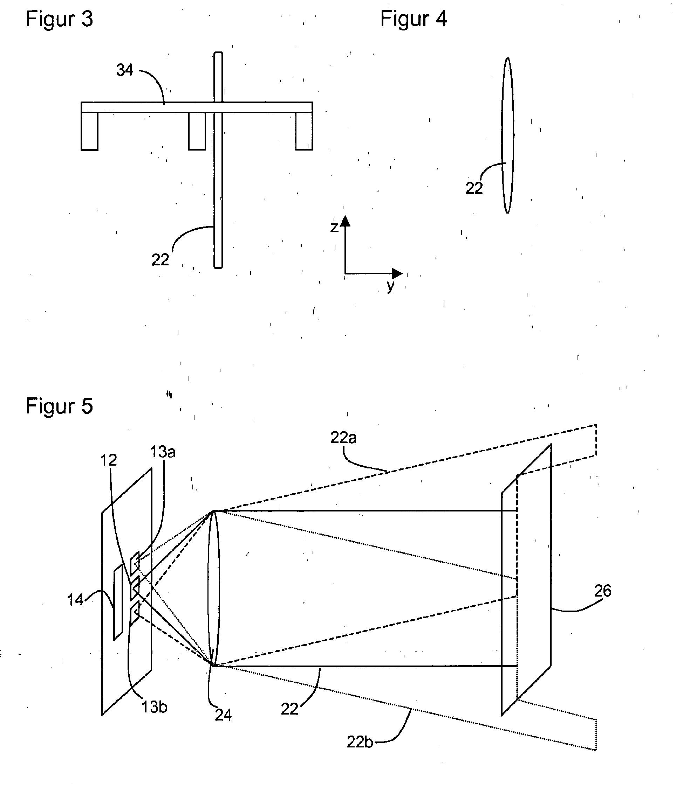

Die Figuren 1 und 2 zeigen eine Ausführungsform eines erfindungsgemäßen Sensors 10, der als Reflektions-Lichtschranke ausgebildet ist, in Seitenansicht beziehungsweise Draufsicht. Der Sensor 10 weist einen Nutzlichtsender 12, zwei Ausrichtlichtsender 13a, 13b, einen beispielsweise als Photodiode ausgebildeten Empfänger 14 sowie eine Auswerteeinheit 16 auf. Nutzlichtsender 12 und Ausrichtlichtsender 13a, 13b verdecken einander in der Draufsicht der Figur 2, wie zeichnerisch durch leicht versetzte Anordnung und Strichelung angedeutet. Die Anordnung ist in Figur 5 besser erkennbar, in deren Zusammenhang weiter unten auch die Funktion der Ausrichtlichtsender 13a, 13b näher erläutert wird.

Nutzlichtsender 12, Ausrichtlichtsender 13a, 13b, Empfänger 14 und Auswerteeinheit 16 sind in einem gemeinsamen Sensorgehäuse 18 angeordnet, das frontseitig mit einer Frontscheibe 20 abgedeckt ist. Das vom Sensor 10 ausgesandte Sendelicht 22 wird von einer dem Nutzlichtsender 12 zugeordneten Sendeoptik 24 etwa linienförmig aufgeweitet, so dass das den Sensor 10 verlassende Sendelicht 22 ein etwa linienförmiges Sendeprofil aufweist, wie beispielsweise in den Figuren 3 und 4 dargestellt ist. Das Sendelicht 22 hat dabei einen annähernd parallelen Sendelichtstrahlenverlauf, wie aus der Darstellung in Figur 1 schematisch erkennbar ist. Gemäß dem Ausführungsbeispiel nach Figur 3 ist das Sendelicht 22 im Querschnitt nahezu rechteckförmig, wobei es sich um ein sehr schmales Rechteck handelt, um die Linienform zu erhalten. Das Sendelichtprofil in dem Ausführungsbeispiel nach Figur 4 ist linienförmig durch eine in die Länge gezogene Ellipsenform gebildet. Das Sendelichtprofil wird durch Sendeoptik 24 bestimmt, die beispielsweise als Stufenlinse ausgebildet sein kann, wodurch der Abstand zwischen Nutzlichtsender 12 und Sendeoptik 24 zur Bauraumreduzierung minimal gehalten werden kann.

Die Linienform des Sendelichts 22 ist ebenfalls in den Figuren 1 und 2 zu erkennen, wobei in der Perspektive der Figur 1 das Sendelicht 22 sehr schmal ist und in der Perspektive der Figur 2 sehr breit, so dass das Sendelicht also in z-Richtung linienförmig ausgebildet ist und senkrecht zur Transportrichtung y vertikal ausgerichtet ist. Obwohl ein linienförmiges Sendelichtprofil bevorzugt ist, umfasst die Erfindung auch Ausführungsformen mit anderen Sendelichtprofilen.

Bei freiem Strahlengang trifft das Sendelicht 22 auf einen Retroreflektor 26 und wird von diesem in sich zum Sensor 10 zurückreflektiert und dort als Empfangslicht 28 vom Empfänger 14 empfangen, dem eine Empfängeroptik 30 vorgeordnet ist. Die Empfängeroptik 30 bündelt das ebenfalls linienförmige Empfangslicht 28 auf den als Photodiode ausgebildeten Empfänger 14.

Damit kein optisches Übersprechen innerhalb des Gehäuses vom Sender zum Empfänger erfolgen kann, ist bevorzugt eine optische Trennwand 31 vorgesehen, die im Sensorgehäuse 18 Sende- und Empfangskanal trennt. Ist der Sensor alternativ als Einweglichtschranke ausgebildet, so erfolgt bereits dadurch die Kanaltrennung, und Sende- und Empfangseinheit sind in je einem Gehäuse untergebracht.

Im Empfänger 14 wird das Empfangslicht in ein elektronisches Empfangssignal umgewandelt, das von der Auswerteeinheit 16 aufgenommen wird. In der Auswerteeinheit 16 wird das Empfangssignal daraufhin ausgewertet, ob im Sendelicht 22 ein opakes Objekt vorhanden ist oder nicht und gegebenenfalls ein Detektionssignal ausgegeben.

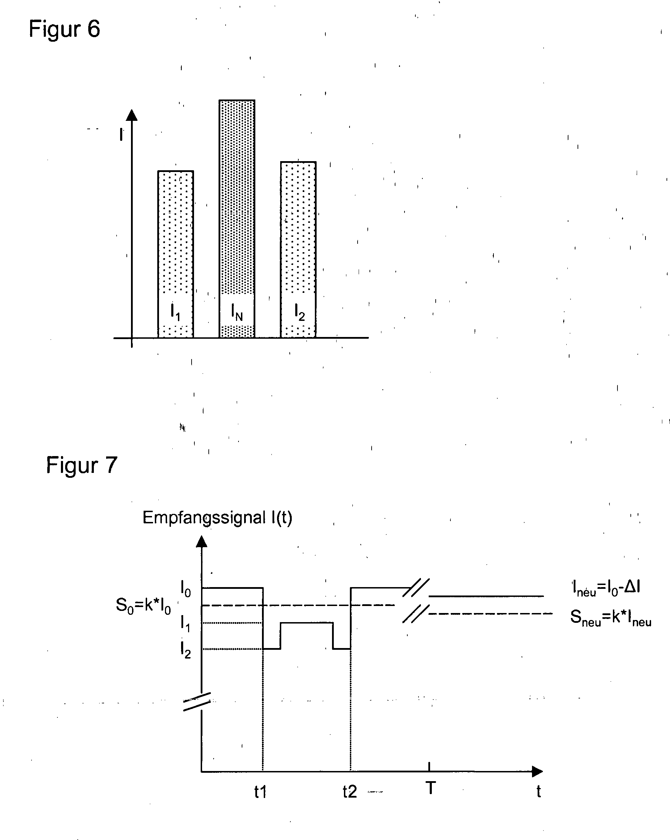

Erfindungsgemäß ist eine optoelektronische Justagehilfe vorgesehen, die nun anhand der Figuren 5 und 6 erläutert wird. Dabei werden die beiden Ausrichtlichtsender 13a, 13b symmetrisch neben dem Nutzlichtsender 12 versetzt angeordnet. Die bei Aktivierung der Sender 12, 13a, 13b von Sendelicht überstrichenen Bereiche sind in Figur 5 überlagert zu erkennen, wobei die gestrichelte Linie 22a zu dem ersten Ausrichtlichtsender 13a, die gepunktete Linie 22b zu dem zweiten Ausrichtlichtsender 13b und die durchgezogene Linie 22 zu dem Nutzlichtsender 12 gehört.

Zu Justierung werden bei freiem Strahlengang die Sender 12, 13a, 13b in einem Multiplexverfahren mittels der Auswertungseinheit 16 selektiv einzeln aktiviert. Die dabei aufgezeichneten Empfangsintensitäten am gemeinsamen Lichtempfänger 14 sind beispielhaft in Figur 6 dargestellt, wobei $I_1$ die Intensität bei aktiviertem erstem Ausrichtlichtsender 13a, $I_2$ die Intensität bei aktiviertem zweitem Ausrichtlichtsender 13b und $I_N$ die Intensität bei aktiviertem Nutzlichtsender 12 ist. Die Ausrichtlichtsender müssen an dem Reflektor vorbeischielen, da sonst keine Lageinformation ableitbar ist, so dass $I_N$ bei korrekter Justierung den höchsten Betrag hat. $I_N$ ist für die Ausrichtung selbst nicht erforderlich, sondern gibt eine Information über die Funktionsreserve, ob also die Empfangsintensität bei freiem Strahlengang noch weit genug über der Aktivierungsschwelle liegt.

Untereinander sollten $I_1$ und $I_2$ denselben Betrag aufweisen. Diese Bedingung kann robust über eine Schwellbewertung $(I_2-I_1)/(I_1+I_2) < \varepsilon$ geprüft werden. Solange die Bedingung nicht erfüllt ist, liefert das Vorzeichen der Intensitätsdifferenz $I_2-I_1$ eine Information über die Richtung und den Betrag über das Ausmaß einer notwendigen Justagekorrektur. Diese Information kann der Sensor 10 auf verschiedene Art anzeigen, beispielsweise über Aktivierung spezieller LEDs, über Farb- oder Blinkcodes oder über bildliche oder Textdarstellungen auf einem LCD. Der Sensor ist erst einsatzbereit, wenn die Position des Sendelichts 22 des Nutzsenders 12 innerhalb eines Toleranzfensters liegt.

Die Ausrichtung der Sender 12, 13a, 13b untereinander ist bereits herstellungsbedingt gegeben, die Justierung betrifft also die Ausrichtung gegenüber dem Reflektor 26 bzw. bei einer Einweglichtschranke zwischen Sende- und Empfangseinheit. Eine Ausrichtung senkrecht zu der Linienrichtung des Sendelichts 22, also in Richtung senkrecht zu der Papierebene der Figur 5, kann durch manuelle Peilung erfolgen, da sie wegen der Größe des Reflektors 26 unkritisch ist. Alternativ können nicht dargestellte weitere Ausrichtlichtsender rechts und links neben dem Nutzlichtsender 14 vorgesehen sein, um auch diese Ausrichtung in analoger Weise zu unterstützen.

In dem Ausführungsbeispiel nach den Figuren 1 und 2 dient der erfindungsgemäße Sensor 10 zur Detektion von Paletten 32. Eine Palette 32 weist einen Palettenboden 34 und Palettenfüße 36 auf. Der optoelektronische Sensor 10 ist nun derart ausgerichtet, dass die Sendelichtlinie senkrecht zum Palettenboden 34 verläuft, so dass bei Transport der Palette 32 in y-Richtung der Palettenboden 34 durch das Sendelicht 22 transportiert wird (siehe auch Figur 3).

Da der Palettenboden 34 im Vergleich zur Ausdehnung des Sendelichts 22 in z-Richtung eine relativ kleine Ausdehnung hat, unterbricht er das Sendelicht nur abschnittsweise, so dass immer ein Großteil des Sendelichts den Reflektor 26 erreicht und in den Empfänger 14 zurückreflektiert wird. Eine besondere Aufgabe des erfindungsgemäßen Sensors ist es daher, eine relativ geringe Intensitätsänderung zu erkennen und möglichst zuverlässig und sicher ein Detektionssignal auszugeben, wenn eine Palette 32 sich zumindest mit ihrem Palettenboden 34 in dem Strahlengang befindet. Dazu arbeitet der Sensor 10 in einer besonderen Ausführungsform wie unter Bezugnahme auf Figur 7 im Folgenden erläutert:

Zu Beginn wird zunächst bei freiem Strahlengang die empfangene Intensität am Empfänger 14 ermittelt und das entsprechende elektronische Empfangssignal $I_0$ gespeichert. Danach wird in der Auswerteeinheit 16 ein Erkennungs-Schwellwert $S_0$ festgelegt, der einem festgelegten Prozentsatz des Empfangssignals bei freiem Strahlengang entspricht.

$$S_0 = k * I_0 \quad \text{mit } k < 1$$

Dieser Erkennungs-Schwellwert $S_0$ muss aber höher liegen als ein Empfangssignal $I_1$, das der empfangenen Intensität entspricht, wenn zumindest der Palettenboden 34 sich im Strahlengang des Sendelichts 22 befindet, beispielsweise in der Zeit zwischen t1 und t2. Dann ist gewährleistet, dass bei Unterschreiten des Erkennungs-Schwellwertes $S_0$ eine Palette vorhanden ist. Dies gilt selbstverständlich auch, wenn ein Palettenfuß 36 in den Strahlengang mit eintreten sollte, da das dann empfangene Signal $I_2$ noch kleiner ist als das Empfangssignal $I_1$ bei nur dem Palettenboden 34 im Sendelicht 22.

Nach Ablauf einer bestimmten Zeit T, dies können beispielsweise mehrere Sekunden oder sogar Minuten oder Stunden sein, wird das Empfangssignal $I_{neu}$ bei freiem Strahlengang, also ohne Paletten, automatisch erneut ermittelt und der bisherige, in der Auswerteeinheit 16 abgespeicherte Wert für $I_0$ überschrieben. Ausgehend von diesem neuen Empfangssignal $I_{neu}$ bei freiem Strahlengang wird ein neuer Erkennungs-Schwellwert $S_{neu}$ mit dem gleichen Prozentsatz errechnet und als neuer Erkennungs-Schwellwert $S_{neu}$ abgespeichert.

$$S_{neu} = k * I_{neu}$$

Mit diesem neuen Erkennungs-Schwellwert $S_{neu}$ wird weitergearbeitet, bis nach erneutem Zeitablauf wieder ein neuer Erkennungs-Schwellwert auf gleiche Weise bestimmt wird. Auf diese Weise wird der Erkennungs-Schwellwert immer wieder nachgeführt. Wenn das Zeitintervall T sehr kurz ist, beispielsweise Sekunden, ist die Nachführung sogar quasi kontinuierlich.

Wie bereits oben erläutert, ist in den Figuren 3 und 4 jeweils ein Sendelichtprofil im Querschnitt schematisch dargestellt. Damit die Erkennung eines sich im Strahlengang 22 befindlichen Palettenbodens 34 unabhängig vom Ort des Auftretens des Palettenbodens 34 ist, sollte das Empfangssignal 11 unabhängig sein von der x- und z-Position.

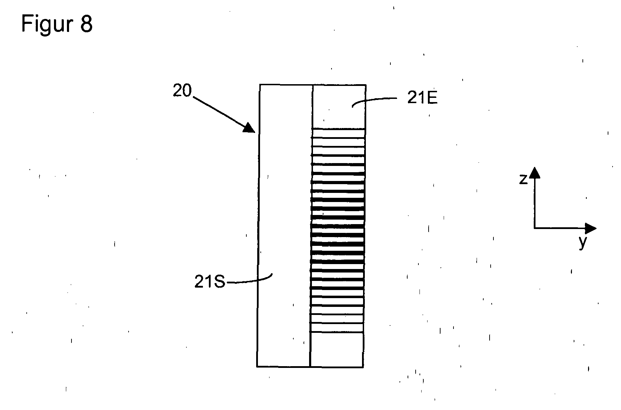

Um die Unabhängigkeit in z-Richtung, also entlang der Sendelichtlinie, zu gewährleisten, sollte das Sendelicht homogen sein, was hohe Anforderungen an die Sendeoptik stellt. Diese lassen sich aber reduzieren, wenn die Homogenisierung auf andere Weise bewerkstelligt werden kann. Dazu ist in einer Weiterbildung der Erfindung vorgesehen, dass die Frontscheibe in dem Bereich 21S, durch den das Sendelicht 22 durch die Frontscheibe 20 tritt oder in dem Bereich 21 E, durch den das Empfangslicht 28 durch die Frontscheibe 20 tritt, musterartig bedruckt ist, so dass letztendlich das vom Sensor ausgesandte und wieder empfangene Licht in verschiedenen Bereichen der Frontscheibe unterschiedlich stark gedämpft wird, so dass letztendlich eine Homogenisierung des Sendelichts in z-Richtung aus Sicht des Empfängers 14 auftritt. Die Muster zum Bedrucken der Frontscheibe können in verschiedenster Art und Weise ausgebildet sein. In Figur 8 ist beispielhaft ein Streifenmuster dargestellt, das in z-Richtung das Sendelicht zentral mehr dämpft als zu den Rändern oben und unten hin. Eine Bedruckung nur des empfängerseitigen Bereichs 21 E ist vorteilhaft, da dann das Sendelicht mit voller Lichtstärke austritt und Reflektionen des Sendelichts an einem Objekt, z.B. dem Palettenboden 34 mit bloßem Auge zu Justagezwecken leichter erkannt werden können.

Die Unabhängigkeit in x-Richtung wird dadurch gewährleistet, dass das vom Sensor 10 ausgesandte Sendelicht 22 durch die Sendeoptik 24 parallel ausgerichtet ist. Der Sensor 10 kann ein Objekt detektieren, wenn es sich in dem durch den Sendelichtstrahlengang 22 spezifizierten, in z-Richtung ausgedehnten Detektionsbereich befindet, wobei das opake Objekt eine bestimmte Mindestabdeckung des Sendelichts verursachen muss, damit das Empfangssignal zur Detektion unter eine vorgegebene Schwelle fällt.

**Patentansprüche**

1. Optoelektronischer Sensor (10), der als Reflexionslichtschranke oder als Lichttaster ausgebildet ist, mit einem Nutzlichtsender (12), einem Lichtempfänger (14), der als eine einfache Photodiode ein einziges gemeinsames Lichtempfangselement ohne Ortsauflösung aufweist, zur Erzeugung eines elektrischen Empfangssignals aus auftreffendem Licht sowie einer Auswertungseinheit (16), welche anhand des Empfangssignals ein Objekt im Strahlengang von Nutzlichtsender (12) zu Lichtempfänger (14) detektieren kann,
**gekennzeichnet durch**
einen ersten Ausrichtlichtsender (13a) und einen zweiten Ausrichtlichtsender (13b), wobei erster Ausrichtlichtsender (13a) und zweiter Ausrichtlichtsender (13b) einzeln aktivierbar sind und die Auswertungseinheit (16) dafür ausgebildet ist, anhand einer Intensität ($I_1$) eines ersten Ausrichtempfangssignals des Lichtempfängers (14) bei aktiviertem erstem Ausrichtlichtsender (13a) und einer Intensität ($I_2$) eines zweiten Ausrichtempfangssignals des Lichtempfängers (14) bei aktiviertem zweitem Ausrichtlichtsender (13b) eine Ausrichtinformation über die Justierung des Sensors (10) gegenüber einem Retroreflektor (26) zu ermitteln, indem geprüft wird, ob die Intensitäten ($I_1$, $I_2$) denselben Betrag aufweisen, und wobei eine gemeinsame Sendeoptik (24) für den Nutzlichtsender (12) und die Ausrichtlichtsender (13a-b) vorgesehen ist.

2. Sensor (10) nach Anspruch 1,
wobei jeweils ein Empfangssignal durch selektive Aktivierung des Nutzlichtsenders (12) oder eines der Ausrichtlichtsender (13a, 13b) per Multiplexing erzeugbar ist.

3. Sensor (10) nach Anspruch 1 oder 2,
wobei die Sendeoptik (24) und/oder eine dem Lichtempfänger (14) zugeordnete Empfangsoptik (30) eine Stufenlinse aufweist.

4. Sensor (10) nach einem der vorhergehenden Ansprüche,
wobei der Nutzlichtsender (12) derart ausgebildet ist, dass austretendes Sendelicht (22) ein in etwa linienförmiges Strahlprofil aufweist und/oder ein annähernd paralleler Sendelichtstrahlenverlauf entsteht.

5. Sensor (10) nach einem der vorhergehenden Ansprüche,
wobei Nutzlichtsender (12) und/oder Lichtempfänger (14) eine Frontscheibe (20) zugeordnet ist, und wobei mindestens eines der Elemente Sendeoptik (24), Empfangsoptik (30) oder Frontscheibe (20) abschnittsweise Sendelicht (22) absorbierende Muster zur Sendelichthomogenisierung aufweist.

6. Sensor (10) nach einem der vorhergehenden Ansprüche,
   wobei erster Ausrichtlichtsender (13a) und zweiter Ausrichtlichtsender (13b) derart zueinander und zu dem Nutzlichtsender (12) angeordnet sind, dass bei Spiegelung an einer Symmetrieebene durch den Nutzlichtempfänger (12) der Sendelichtkegel des ersten Ausrichtlichtsenders (13a) auf denjenigen des zweiten Ausrichtlichtsenders (13b) fällt und umgekehrt.

7. Sensor (10) nach einem der vorhergehenden Ansprüche,
   wobei die Auswertungseinheit (16) dafür ausgebildet ist, die Ausrichtinformation durch die Vorschrift $((I_2-I_1)/(I_1+I_2))$ aus dem Verhältnis der Differenz $(I_2-I_1)$ der Intensitäten $(I_1, I_2)$ der Empfangssignale bei aktiviertem erstem Ausrichtlichtsender (13a) und aktiviertem zweitem Ausrichtlichtsender (13b) zu der Summe $(I_1+I_2)$ dieser Intensitäten $(I_1, I_2)$ zu bestimmen.

8. Sensor (10) nach einem der vorhergehenden Ansprüche,
   wobei mindestens zwei weitere Ausrichtlichtsender derart angeordnet sind, dass mit ihrer Hilfe eine Ausrichtinformation in Querrichtung zu der Verbindungslinie zwischen erstem Ausrichtlichtsender (13a) und zweitem Ausrichtlichtsender (13b) ableitbar ist.

9. Sensor (10) nach einem der vorhergehenden Ansprüche,
   der als Reflexionslichtschranke ausgebildet ist, indem Licht des Nutzlichtsenders (12) bei freiem Strahlengang über einen Reflektor (26) vom Lichtempfänger (14) empfangen wird und die Auswertungseinheit (16) dafür ausgebildet ist, bei Detektion eines opaken Objekts im Strahlengang ein Detektions- oder Schaltsignal auszugeben.

10. Sensor (10) nach einem der vorhergehenden Ansprüche,
    wobei die Auswerteeinheit (16) Mittel zur Bestimmung und Nachführung eines Erkennungs-Schwellwertes (S) aufweist und ein Objekt anhand einer Unterschreitung des Erkennungs-Schwellwerts bei aktiviertem Nutzlichtsender (12) detektieren kann, wobei der Erkennungs-Schwellwert einem festlegbaren Prozentsatz des Empfangssignals bei freiem Strahlengang entspricht.

11. Verfahren zur Ausrichtung eines optoelektronischen Sensors (10) gegenüber einem Retroreflektor (26),
    wobei der Sensor (10) als Reflexionslichtschranke oder als Lichttaster ausgebildet ist und einen Nutzlichtsender (12) und eine einfache Photodiode als ein einziges gemeinsames Lichtempfangselement (14) ohne Ortsauflösung aufweist, das aus auftreffendem Licht ein elektrisches Empfangssignal erzeugt, und wobei der Sensor (10) Objekte im Strahlengang von Nutzlichtsender (12) zu Lichtempfänger (14) detektiert, wobei ein erster Ausrichtlichtsender (13a) und ein zweiter Ausrichtlichtsender (13b) des Sensor (10) nacheinander einzeln aktiviert und die dabei jeweils erzeugten Ausrichtempfangssignale des Lichtempfängers (14) zu einer Ausrichtinformation über die Justierung des Sensors (10) verrechnet werden, bei der das Vorzeichen einer Differenz der Intensitäten $(I_1, I_2)$ der Ausrichtempfangssignale eine Information über die Richtung und der Betrag der Differenz der Intensitäten $(I_1, I_2)$ eine Information über das Ausmaß der notwendigen Justagekorrektur liefert, wobei mittels einer dem Nutzlichtsender (12) vorgeordneten Sendeoptik (24) ein gewünschtes Sendelichtprofil erhalten wird und die Ausrichtlichtsender (13a-b) dieselbe Sendeoptik (24) verwenden.

12. Verfahren nach Anspruch 11,
    wobei das Sendelicht (22) des Nutzlichtsenders (12) ein in etwa linienförmiges Strahlprofil mit annähernd parallelem Sendelichtstrahlenverlauf aufweist, und wobei die optischen Achsen von erstem Ausrichtlichtsender (13a) und zweitem Ausrichtlichtsender (13b) durch die Mittelachse des parallelen Sendelichtstrahlverlaufs ineinander gespiegelt werden.

13. Verfahren nach Anspruch 11 oder 12,
    wobei in einer Einlernphase folgende Schritte ausgeführt werden:

    - Aufnahme der Empfangssignale bei jeweils einzeln aktiviertem Nutzlichtsender (12), erstem Ausrichtlichtsender (13a) und zweitem Ausrichtlichtsender (13b),
    - Bewertung des Empfangssignals des Nutzlichtsenders (12) gegenüber einer erforderlichen Mindestintensität, um eine hinreichende Funktionsreserve zu gewährleisten,
    - Bewertung der Empfangssignale der Ausrichtlichtsender (13a, 13b) nach der Vorschrift $(I_2-I_1)/(I_1+I_2)$ gegenüber einer Schwelle $(\varepsilon)$ und
    - Ausgabe einer Korrekturinformation für die Justierung des Sensors (10) oder Anzeige einer ausreichenden Justierung.

14. Verfahren nach Anspruch 13,
    wobei zusätzlich ein Erkennungs-Schwellwert als einstellbarer Prozentsatz des Empfangssignals bei allein aktiviertem Nutzlichtsender (12) und freiem Strahlengang festgelegt wird, wobei im Betrieb ein Objekt anhand einer Unterschreitung des Erkennungs-Schwellwerts detektiert wird.

**15.** Verfahren nach Anspruch 13 oder 14,
wobei die Schritte der Einlernphase wiederholt werden, um die Funktionsreserve, die Justierung und/oder den Erkennungs-Schwellwert im Betrieb sicherzustellen oder nachzuführen.

**Claims**

**1.** An optoelectronic sensor (10), which is configured as a reflection light barrier or as a light sensor, having a useful light transmitter (12), a light receiver (14, which as a simple photodiode has a single common light reception element without spatial resolution, for the regeneration of an electrical received signal from incident light and having an evaluation unit (16) which can detect an object in the beam path from the useful light transmitter (12) to the light receiver (14) with reference to the received signal, **characterized by** a first alignment light transmitter (13a) and a second alignment light transmitter (13b), wherein the first alignment light transmitter (13a) and the second alignment light transmitter (13b) are individually actuable and the evaluation unit (16) is configured to determine alignment information on the adjustment of the sensor (10) with respect to a retroreflector (26) using an intensity $(I_1)$ of a first received alignment signal of the light receiver (14) with an activated first alignment light transmitter (13a) and using an intensity $(I_2)$ of a second received alignment signal of the light receiver (14) with an activated second alignment light transmitter (13) in that a check is made whether the intensities $(I_1, I_2)$ have the same amount, and wherein a common optical transmission device (24) is provided for the useful light transmitter (12) and for the alignment light transmitters (13a-b).

**2.** A sensor (10) in accordance with claim 1, wherein a respective received signal can be generated by selective activation of the useful light transmitter (12) or of one of the alignment light transmitters (13a, 13b) by multiplexing.

**3.** A sensor (10) in accordance with claim 1 or claim 2, wherein the optical transmission device (24) and/or an optical reception device (30) associated with the light receiver (14) has a Fresnel lens.

**4.** A sensor (10) in accordance with claim 1 or claim 2, wherein the useful light transmitter (12) is designed such that emerging transmitted light (22) has an approximately linear beam profile and/or an approximately parallel transmitted light beam extent arises.

**5.** A sensor (10) in accordance with any one of the preceding claims, wherein a front screen (20) is associated with the useful light transmitter (12) and/or with the light receiver (14); and wherein at least one of the elements of optical transmission system (24), optical reception system (30) or front screen (20) has patterns absorbing transmitted light (22) section-wise for the homogenization of transmitted light.

**6.** A sensor (10) in accordance with any one of the preceding claims, wherein the first alignment light transmitter (13a) and the second alignment light transmitter (13b) are arranged with respect to one another and with respect to the useful light transmitter (12) such that the transmitted light cone of the first alignment light transmitter (13a) is incident on that of the second alignment light transmitter (13b), and vice versa, on a reflection at a symmetry plane by the useful light receiver (12).

**7.** A sensor (10) in accordance with any one of the preceding claims, wherein the evaluation unit (16) is designed to determine the alignment information by the rule $((I_2-I_1)(I_1+I_2))$ from the ratio of the difference $(I_2-I_1)$ of the intensities $(I_1, I_2)$ of the received signals with an activated first alignment light transmitter (13a) and with an activated second alignment transmitter (13b) to the sum $(I_1+I_2)$ of these intensities $(I_1, I_2)$.

**8.** A sensor (10) in accordance with any one of the preceding claims, wherein at least two further alignment light transmitters are arranged such that alignment information can be derived with their aid in the transverse direction to the connection line between a first alignment light transmitter (13a) and a second alignment light transmitter (13b).

**9.** A sensor (10) in accordance with any one of the preceding claims, which is designed as a reflection light barrier in that, with a free beam path, light of the useful light transmitter (12) is received via a reflector (26) by the light receiver (14); and the evaluation unit (16) is configured to output a detection signal or a switch signal on detection of an opaque object in the beam path.

**10.** A sensor (10) in accordance with any one of the preceding claims, wherein the evaluation unit (16) has means for the determination and tracking of a recognition threshold value (S) and can detect an object with reference to a falling below of the recognition threshold value with an activated useful light transmitter (12), wherein the recognition threshold value corresponds to a fixable percentage of the received signal with a free beam path.

**11.** A method of aligning an optoelectronic sensor (10) with respect to a retroreflector (26), wherein the sensor (10) is configured as a reflection light barrier or as a light sensor and has a useful light transmitter (12) and a simple photodiode as a single common light reception element (14) without spatial resolution which generates an electrical reception signal from incident light, and wherein the sensor (10) detects objects in the beam path from the useful light transmitter (12) to the light receiver (14), wherein a first alignment light transmitter (13a) and a second alignment light transmitter (13b) of the sensor (10) are individually activated consecutively and the respective received alignment signals of the light receiver (14) generated in this respect are calculated to form alignment information on the adjustment of the sensor (10), in which the sign of a difference in the intensities ($I_1$, $I_2$) of the received alignment signals delivers information on the direction and in which the amount of the difference of the intensities ($I_1$, $I_2$) delivers information on the extent of the required adjustment correction, wherein a desired transmitted light profile is obtained by means of an optical transmission device (24) arranged before the useful light transmitter (12) and the alignment light transmitters (13a-b) use the same optical transmission device (24).

12. A method in accordance with claim 11, wherein the transmitted light (22) of the useful light transmitter (12) has an approximately linear beam profile with an approximately parallel transmitted light beam extent; and wherein the optical axes from the first alignment light transmitter (13a) and from the second alignment light transmitter (13b) are reflected into one another through the center axis of the parallel transmitted light beam extent.

13. A method in accordance with claim 11 or claim 12, wherein the following steps are carried out in a teach-in phase:

 - receiving the received signals with a respectively individually activated useful light transmitter (12), first alignment light transmitter (13a) and second alignment transmitter (13b);
 - evaluating the received signal of the useful light transmitter (12) with respect to a required minimum intensity to ensure a sufficient functional reserve;
 - evaluating the received signals of the alignment light transmitters (13a, 13b) in accordance with the rule $(I_2-I_1)/(I_1+I_2)$ with respect to a threshold ($\varepsilon$); and
 - outputting correction information for the adjustment of the sensor (10) or displaying a sufficient adjustment.

14. A method in accordance with claim 13, wherein a detection threshold value is additionally fixed as an adjustable percentage of the received signal with only the useful light transmitter (12) activated and with a free beam path, with an object being detected in operation with reference to a falling below of the recognition threshold value.

15. A method in accordance with claim 13 or claim 14, wherein the steps of the teach-in phase are repeated to ensure or track the functional reserve, the adjustment and/or the recognition threshold in operation.

**Revendications**

1. Capteur optoélectronique (10), qui est réalisé comme une barrière lumineuse à réflexion ou comme un palpeur de lumière, comprenant un émetteur de lumière utile (12), un récepteur de lumière (14), qui comprend à titre de simple photodiode un unique élément récepteur de lumière commun sans résolution locale, pour engendrer un signal de réception optique à partir de la lumière incidente, ainsi qu'une unité d'évaluation (16), qui est capable de détecter au moyen du signal de réception un objet dans le trajet des rayons depuis l'émetteur de lumière utile (12) vers le récepteur de lumière (14),
**caractérisé par**

 - un premier émetteur de lumière orientée (13a) et un second émetteur de lumière orientée (13b), tels que le premier émetteur de lumière orientée (13a) et le second émetteur de lumière orientée (13b) peuvent être activés individuellement, et l'unité d'évaluation (16) est réalisée pour, au moyen d'une intensité ($I_1$) d'un premier signal récepteur orienté du récepteur de lumière (14) lorsque le premier émetteur de lumière orientée (13a) est activé et au moyen d'une intensité ($I_2$) d'un second signal récepteur orienté du récepteur de lumière (14) lorsque le second émetteur de lumière orientée (13b) est activé, déterminer une information d'orientation concernant l'ajustement du capteur (10) par rapport à un rétroréflecteur (26), en vérifiant si les intensités ($I_1$, $I_2$) ont la même valeur, et dans lequel il est prévu une optique d'émission commune (24) pour l'émetteur de lumière utile (12) et l'émetteur de lumière orientée (13a-b).

2. Capteur (10) selon la revendication 1, dans lequel un signal de réception respectif est susceptible d'être engendré par multiplexage, par activation sélective de l'émetteur de lumière utile (12) ou de l'un des émetteurs de lumière orientée (13a, 13b).

3. Capteur (10) selon la revendication 1 ou 2,

dans lequel l'optique d'émission (24) et/ou une optique de réception (30) associée au récepteur de lumière (14) comprend une lentille de Fresnel.

4. Capteur (10) selon l'une des revendications précédentes,
dans lequel l'émetteur de lumière utile (12) est réalisé de telle façon que la lumière émise sortante (22) présente un profil de rayonnement approximativement sous forme linéaire et/ou qu'il se produit un tracé des rayons de lumière émise approximativement parallèle.

5. Capteur (10) selon l'une des revendications précédentes,
dans lequel une vitre frontale (20) est associée à l'émetteur de lumière utile (12) et/ou au récepteur de lumière (14), et dans lequel l'un au moins des éléments que sont l'optique d'émission (24), l'optique de réception (30) ou la vitre frontale (20) comporte par secteur un motif absorbant la lumière émise (22) pour homogénéiser la lumière émise.

6. Capteur (10) selon l'une des revendications précédentes,
dans lequel le premier émetteur de lumière orientée (13a) et le second émetteur de lumière orientée (13b) sont agencés l'un par rapport à l'autre et par rapport à l'émetteur de lumière utile (12) de telle façon que lors d'une réflexion au niveau d'un plan de symétrie traversant le récepteur de lumière utile (12), le cône de lumière émise du premier émetteur de lumière orientée (13a) tombe sur celui du second émetteur de lumière orientée (13b) et inversement.

7. Capteur (10) selon l'une des revendications précédentes,
dans lequel l'unité d'évaluation (16) est réalisée pour déterminer la formation d'orientation par la règle $((I_2 - I_1)/(I_1 + I_2))$ à partir du rapport de la différence $(I_2 - I_1)$ des intensités $(I_1, I_2)$ des signaux reçus lorsque le premier émetteur de lumière orientée (13a) est activé et que le second émetteur de lumière orientée (13b) est activé sur la somme $(I_1 + I_2)$ de ces intensités $(I_1, I_2)$.

8. Capteur (10) selon l'une des revendications précédentes,
dans lequel au moins deux autres émetteurs de lumière orientée sont agencés de telle façon qu'avec leur aide il est possible de dériver une information d'orientation en direction transversale à la ligne de liaison entre le premier émetteur de lumière orientée (13a) et le second émetteur de lumière orientée (13b).

9. Capteur (10) selon l'une des revendications précédentes,

qui est réalisé sous forme de barrière lumineuse à réflexion, dans laquelle la lumière de l'émetteur de lumière utile (12) est reçue par le récepteur de lumière (14) via un réflecteur (26) lorsque le trajet du rayonnement est libre, et l'unité d'évaluation (16) est réalisée pour délivrer un signal de détection ou un signal de commutation en cas de détection d'un objet opaque dans le trajet du rayonnement.

10. Capteur (10) selon l'une des revendications précédentes,
dans lequel l'unité d'évaluation (16) comprend des moyens pour déterminer et pour réajuster une valeur seuil de reconnaissance (S), et est capable de détecter un objet lors du passage au-dessous de la valeur seuil de reconnaissance lorsque l'émetteur de lumière utile (12) est activé, et la valeur seuil de reconnaissance correspond à un pourcentage fixé du signal reçu lorsque le trajet du rayonnement est libre.

11. Procédé pour orienter un capteur optoélectronique (10) par rapport à un rétroréflecteur (26), dans lequel le capteur (10) est réalisé comme une barrière lumineuse à réflexion ou comme un palpeur de lumière et comprend un émetteur de lumière utile (12) et une simple photodiode à titre d'élément récepteur de lumière commun unique (14) sans résolution locale, qui engendre à partir de la lumière incidente un signal de réception électrique, et dans lequel le capteur (10) détecte des objets dans le trajet du rayonnement depuis l'émetteur de lumière utile (12) vers le récepteur de lumière (14), dans lequel un premier émetteur de lumière orientée (13a) et un second émetteur de lumière orientée (13b) du capteur (10) sont activés individuellement l'un après l'autre et les signaux de réception d'orientation respectivement engendrés par le récepteur de lumière (14) font l'objet d'un calcul pour donner une information d'orientation concernant l'ajustement du capteur (10), tel que le signe d'une différence des intensités $(I_1, I_2)$ des signaux de réception d'orientation fournissent une information sur la direction, et la valeur de la différence des intensités $(I_1, I_2)$ fournit une information sur l'amplitude de la correction d'ajustement nécessaire, dans lequel on obtient au moyen d'une optique de réception (24) agencée en avant de l'émetteur de lumière utile (12) un profil de lumière émise souhaitée, et les émetteurs de lumière orientée (13a-b) utilisent la même optique d'émission (24).

12. Procédé selon la revendication 11,
dans lequel la lumière émise (22) par l'émetteur de lumière utile (12) présente un profil de rayonnement approximativement de forme linéaire avec un tracé des rayons de lumière émise approximativement parallèle, et dans lequel les axes optiques du premier émetteur de lumière orientée (13a) et du second émetteur de lumière orientée (13b) sont symétriques l'un de l'autre vis-à-vis de l'axe médian du tracé des rayons de lumière émise parallèle.

13. Procédé selon la revendication 11 ou 12, dans lequel on exécute les étapes suivantes dans une phase d'apprentissage :

 - enregistrement des signaux émis lorsque l'émetteur de lumière utile (12), le premier émetteur de lumière orientée (13a) et le second émetteur de lumière orientée (13b) sont activés respectivement individuellement,
 - évaluation du signal de réception de l'émetteur de lumière utile (12) par rapport à une intensité minimum requise, pour garantir une réserve fonctionnelle suffisante,
 - évaluation des signaux de réception d'émetteur de lumière orientée (13a, 13b) selon la règle $(I_2 - I_1)/(I_1 + I_2)$ par rapport à un seuil ($\varepsilon$), et
 - fourniture d'une information de correction pour l'ajustement du capteur (10), ou affichage d'un ajustement suffisant.

14. Procédé selon la revendication 13, dans lequel on détermine en supplément une valeur seuil de reconnaissance sous forme d'un pourcentage réglable du signal de réception lorsque l'émetteur de lumière utile (12) seul est activé et que le trajet du rayonnement est libre, et on détecte en fonctionnement un objet lors du passage au-dessous de la valeur seuil de reconnaissance.

15. Procédé selon la revendication 13 ou 14, dans lequel les étapes de la phase d'apprentissage sont répétées afin de garantir ou de réajuster en fonctionnement la réserve fonctionnelle, l'ajustement et/ou la valeur seuil de reconnaissance.

## Figur 1

## Figur 2

Figur 3

34

22

Figur 4

22

z

y

Figur 5

12  13a

14

13b

22a

24  22

22b

26

## Figur 6

## Figur 7

Empfangssignal I(t)

$S_0 = k*I_0$

$I_0$

$I_1$

$I_2$

$I_{neu} = I_0 - \Delta I$

$S_{neu} = k*I_{neu}$

t1    t2    T    t

Figur 8

**IN DER BESCHREIBUNG AUFGEFÜHRTE DOKUMENTE**

**In der Beschreibung aufgeführte Patentdokumente**

- EP 1503226 A2
- DE 10212432 A1
- EP 0875873 B1
- DE 102006050189 B4
- DE 19907548 C2
- US 20010030743 A1
- EP 0891004 B1